# EUROPÄISCHE PATENTANMELDUNG

(11) **EP 3 205 567 A1**
(43) Veröffentlichungstag der Anmeldung: **16.08.2017**
(21) Anmeldenummer: 17000239.8
(22) Anmeldetag: 10.02.2017
(51) Int. Cl.: B62K 27/12, B62J 7/08, B62J 7/04, A45C 5/14

(54) **VORRICHTUNG ZUR LÖSBAREN BEFESTIGUNG VON ROLLBAREM TRANSPORTGUT AN EINEM ZWEIRAD**

(30) Priorität: 10.02.2016 DE 102016001679
(71) Anmelder: Drechsel, Wolf, 14050 Berlin (DE)
(72) Erfinder: Drechsel, Wolf, 14050 Berlin (DE)

(57) **Zusammenfassung**

Die Erfindung betrifft eine Vorrichtung zur lösbaren Befestigung von rollbarem Transportgut an einem Zweirad. Die Vorrichtung umfasst einen Griffhalter, der zur Aufnahme eines an dem Transportgut angeordneten Griffs ausgebildet ist, sowie ein an dem Griffhalter angeordnetes Schwenkelement; weiterhin einen Aufnahmeblock, welcher das an dem Griffhalter angeordnete Schwenkelement aufnimmt, und ein an dem Aufnahmeblock angeordnetes Befestigungselement zur Befestigung des Aufnahmeblocks an dem Zweirad.

## Beschreibung

Die Erfindung betrifft eine vielseitige Vorrichtung zur lösbaren Befestigung von rollbarem Transportgut an einem Zweirad.

Bekannt ist die Verbindung von Zweirädern und Anhängern mittels Anhängerkupplungen.

Aus DE 44 27 036 C2 ist eine Anhängerkupplung zum Verbinden eines Fahrradanhängers mit einem Fahrrad bekannt. Die Deichsel des Anhängers ist an ihrem Ende als rohrförmiges Gegenelement ausgebildet. Die Anhängerkupplung weist als Gegenstück ein zylindrisches Steckelement auf, auf das das Gegenelement aufgeschoben wird. Gesichert wird die Verbindung mit einem handelsüblichen Bügelschloss, wobei das Sperrelement des Schlosses durch fluchtende Bohrungen in Gegenelement und Steckelement geführt wird.

US 4,274,649 zeigt einen Anhänger und eine Anhängerkupplung für ein Fahrrad, wobei am Fahrrad ein Drehlager angeordnet ist, in das ein Zapfen der Anhängerdeichsel eingeführt und mittels eines Bolzens gesichert wird.

DE 100 02 412 A1 offenbart eine Anhängerkupplung für Fahrräder, wobei am Anhänger ein als Verbindungsstift ausgebildetes Verbindungselement vorgesehen ist, das in eine Aufnahmeöffnung der Anhängerkupplung am Fahrrad eingeführt und mittels eines Sperrelementes gesichert wird.

DE 699 17 882 T2 beschreibt eine Anhängerkupplung, die ausschließlich für einspurige (einrädrige) Fahrradanhänger geeignet ist. Ein Halter, der aus zwei mittels mehrerer Schrauben starr verbundenen Halbschalen zusammengefügt ist, wird an einem gummierten Rundrohr mit definiertem Durchmesser dauerhaft befestigt. Die Kupplungsanordnung besitzt nur zwei Freiheitsgrade, da der einspurige Anhänger andernfalls um die Längsachse kippen würde. Durch das Anbringen der Anhängerkupplung am Sattelrohr des Fahrrads wird die Zugdeichsel des Anhängers über dem Gepäckträger geführt, was dessen Nutzung, zum Beispiel als Basis für einen Kindersitz, verhindert.

Nachteilig bei den bekannten Anhängerkupplungen ist, dass ein auf die Anhängerkupplung abgestimmtes Gegenstück am Anhänger vorhanden sein muss.

US 4,174,120 beschreibt eine Anhängevorrichtung für einen zweirädrigen Handwagen. Diese weist zwei Drehgelenke um die Querachse auf. Da der Handwagen beim Bremsen relativ zum Fahrrad nach vorn gedrückt wird, schiebt diese Bewegung den Y-förmigen Bügel nach oben, wobei der Anhänger das Hinterrad des Fahrrads berühren und gegebenenfalls blockieren würde. Dadurch ist die kommerzielle Nutzbarkeit dieser Vorrichtung in Frage gestellt.

Der Erfindung liegt die Aufgabe zugrunde, eine einfache und universelle Vorrichtung zu schaffen, mittels der handelsübliches rollbares Transportgut schnell und einfach lösbar an einem Zweirad befestigt werden kann.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

### Definitionen

Als Zweirad wird im folgenden ein Fahrrad, auch mit elektrischer Antriebsunterstützung, sowie ein leichtes Kraftrad mit einer bauartbedingten Höchstgeschwindigkeit von ca. 40 km/h, also Mofa, Moped, Motorroller o.ä. verstanden. Rikschas werden im Rahmen dieser Erfindung den Zweirädern als Sonderform zugeordnet.

Mit dem Begriff rollbares Transportgut sind von Hand bewegbare, rollbare Transporteinrichtungen gemeint. Diese werden in der Regel mittels eines Handgriffs, der rechtwinklig zur Bewegungsrichtung angeordnet ist, in Tätigkeit gesetzt. Einige Ausführungsformen des rollbaren Transportgutes werden im Betrieb aus einer vertikalen Ruheposition in eine Schräglage gebracht. Typische Ausführungsbeispiele sind 2- oder 4-rädrige Rollenkoffer (sogenannte "Trolleys"), Einkaufsroller (auch "Einkaufs-Shopper" genannt) oder Sackkarren.

Mit dem Wort Griff ist eine auf die Anforderungen der menschlichen Hand zugerichtetes Bauelement gemeint. Daher wird ein Griff oder Handgriff typischerweise einen Durchmesser von ca. 20 bis 40mm und oft einen Überzug aus einem weichen Material aufweisen, wobei eine ergonomische Formung mit Rippen etc. angestrebt wird. Es sind aber auch Handgriffe aus Metall bekannt, die beispielsweise eine Rändelung aufweisen, um die Gefahr des Abrutschens zu verhindern und die Griffsicherheit zu erhöhen.

Mit dem Begriff Sicherungselement ist ein Bauteil gemeint, das eine formschlüssige Verbindung zwischen Griff und Griffhalter herstellt, die entweder durch einen Nutzereingriff gelöst werden kann, oder sich, sofern das Transportgut umkippt, selbsttätig löst. Es kann als schieb- oder schwenkbarer Riegel, als Spannelement (zum Beispiel ein Spannseil aus elastischem Material) oder elastisches Klemmelement ausgeführt werden.

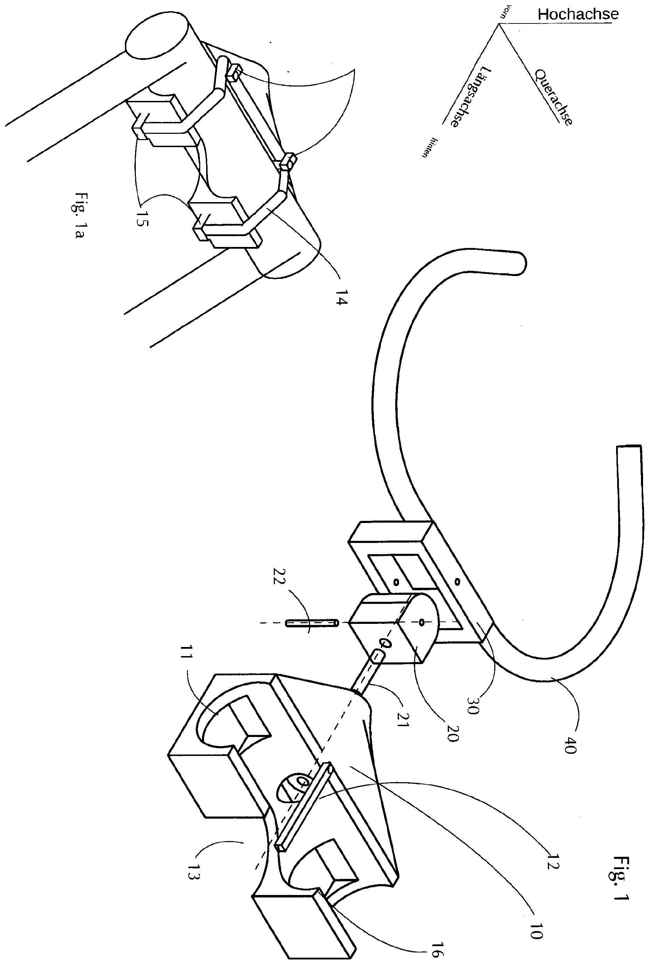

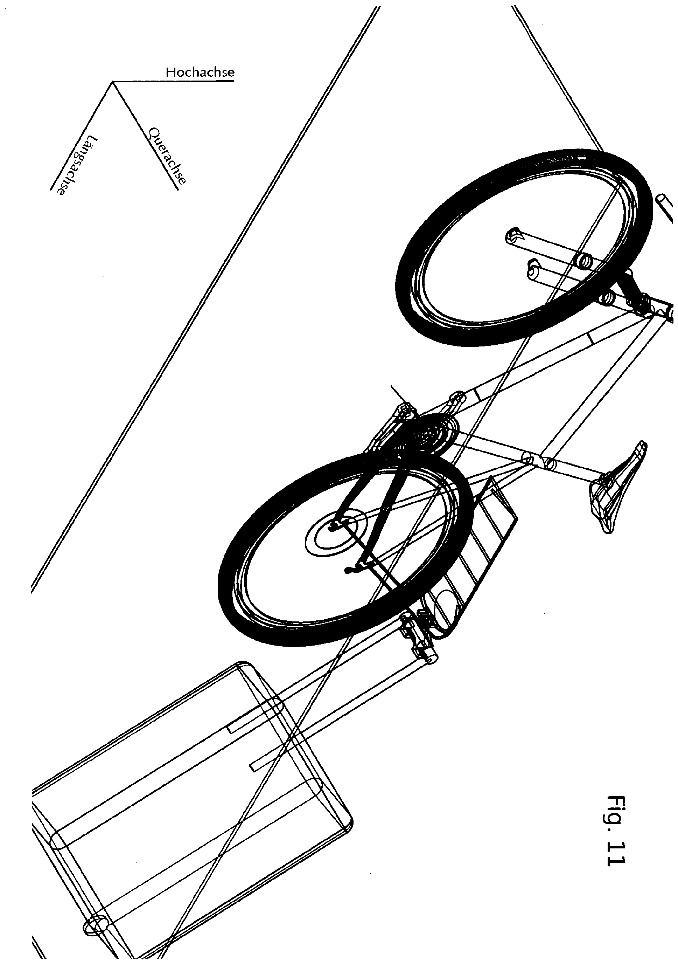

Als Längsachse wird die Achse parallel zur Längsachse des Zweirads bezeichnet, als Querachse die Horizontale rechtwinklig dazu, und als Hochachse die Vertikale. (Siehe auch Fig. 1 und 11.)
Als vorn wird der Teil des Zweirades verstanden, der über einen Lenker das Vorderrad lenkbar ansteuert. Hinten ist der Teil des Zweirades, der das angetriebene zweite Rad umfasst.

Mit Neigungswinkel des Transportgutes wird der Winkel gegen die Horizontale, quer zur Fahrtrichtung bezeichnet, den das Transportgut bei Rotation um die Längsachse einnimmt.

Unter dem Begriff Umkippen des Transportgutes wird das Überschreiten eines Neigungswinkels von 90° verstanden.

### Grundzüge der Erfindung

Der Erfindung liegt die Idee zugrunde, eine Vorrichtung zu schaffen, mit der sich Transportgut mit einem Zugfahrzeug verbinden lässt, wobei das Transportgut außer einem rechtwinklig zur Fahrtrichtung angeordneten Handgriff keine besonderen Einrichtungen aufweisen muss, um mit dem Zugfahrzeug verbunden werden zu können.

Kern der Erfindung ist es, eine Möglichkeit zu schaffen, rollbares Transportgut, das einen Handgriff zur manuellen Bewegung des Transportgutes aufweist, an einem Zweirad derart zu befestigen, dass das Transportgut mit dem Zweirad sicher bewegt werden, gleichzeitg aber jederzeit mit einer einfachen Aktion wieder gelöst werden kann.

Die Erfindung stellt die für die Verwendung handelsüblichen, zweirädrigen Transportgutes notwendige Beweglichkeit zwischen Zweirad und Transportgut um alle drei Raumrichtungen her.

### Bevorzugte Ausführungsformen

Gemäß einer bevorzugten Ausführungsform umfasst die Vorrichtung zur lösbaren Befestigung eines rollbaren Transportguts an einem Zweirad folgende Merkmale:
- einen Griffhalter, wobei der Griffhalter zur Aufnahme eines an dem Transportgut angeordneten Griffs ausgebildet ist,
- ein an dem Griffhalter angeordnetes Schwenkelement,
- einen Aufnahmeblock, welcher das an dem Griffhalter angeordnete Schwenkelement aufnimmt und
- ein an dem Aufnahmeblock angeordnetes Befestigungselement zur Befestigung des Aufnahmeblocks an dem Zweirad.

Besonders bevorzugt wird die Vorrichtung mittels eines universell nutzbaren Befestigungselementes am hinteren Ende des Fahrradgepäckträgers angebracht. Dies geschieht so, dass der Fahrradgepäckträger weiterhin nutzbar bleibt. Damit ist der Nachteil vieler handelsüblicher Fahrradanhänger vermieden, deren Zugdeichsel von hinten im geringen Abstand über den Gepäckträger zu einer am Sattelrohr angebrachten Kupplung führt und so den Transport weiterer Güter auf dem Gepäckträger oder die Verwendung eines Kindersitzes in diesem Bereich verhindert.

In einer Ausführungsform weist der Griffhalter mindestens eine Ausnehmung auf, die zur Aufnahme eines an dem Transportgut angeordneten Griffs ausgebildet ist. Die Ausnehmung des Griffhalters weist einen etwas größeren Durchmesser auf als der größte handelsübliche Durchmesser des Griffs des Transportgutes, wodurch eine universelle Nutzbarkeit der Vorrichtung mit den Handgriffen unterschiedlicher Transportgüter gewährleistet wird. Die Ausnehmung kann ganz oder teilweise mit elastischem Material ausgekleidet sein, um Spielfreiheit zwischen Griffhalter und Handgriff und somit geräuschlosen Betrieb zu gewährleisten.

Besonders bevorzugt kann der Griffhalter der Vorrichtung eine weitere Ausnehmung rechtwinklig zur ersten Ausnehmung aufweisen, die ausgebildet ist, die Befestigungsstange eines T-förmigen Griffs eines rollbaren Transportgutes aufzunehmen. Die zweite Ausnehmung erlaubt somit die Verwendung von T-förmigen Handgriffen.

Besonders bevorzugt weist die Vorrichtung am Griffhalter mindestens ein Sicherungselement auf, das den Griff des rollbaren Transportguts am Griffhalter fixiert. Das Sicherungselement kann als gummielastisch ausgebildetes Klemmelement und/oder Riegelelement, und/oder als Spannelement ausgebildet sein. Der Handgriff des Transportgutes kann somit mittels des Sicherungselementes, gegen herausfallen gesichert werden.

In einer weiteren Ausführungsform wird der der Griffhalter insgesamt aus elastischem Material gefertigt. Sein Innendurchmesser ist etwas kleiner als der Durdmesser der kleinsten handelsüblichen Handgriffe. Durch das Einlegen des Griffs wird der gesamte Griffhalter verformt und hält durch die Rückstellkraft des Materials den Griff in Position.

Eine bevorzugte Ausführungsform der Vorrichtung zeichnet sich dadurch aus, dass das Schwenkelement im Aufnahmeblock schwenkbar gelagert ist. Dabei wird ein bolzenförmig ausgebildetes Element am Schwenkelement derart angeordnet, dass der Griffhalter mit dem Schwenkelement verbunden und der Griffhalter um die Hochachse drehbar gelagert ist. Ein weiteres bolzenförmig ausgebildetes Element wird zwischen Schwenkelement und Aufnahmeblock parallel zur Längsachse angeordnet, um ein Schwenken/Rotieren des Schwenkelements im Aufnahmeblock um die Mittelachse des weiteren bolzenförmigen Elements zu erlauben. Der Aufnahmeblock weist eine Öffnung auf, in der das Schwenkelement in vertikaler Richtung mit geringem Spiel eingepasst ist, und das eine Drehbewegung um ca. 90° um die Hochachse erlaubt. Der Drehwinkel kann durch trapezförmige, sich nach hinten verbreiternde Ausgestaltung vergrößert werden. Der Aufnahmeblock umfasst bei dieser Ausführungsform bevorzugt eine besonders ausgebildete Öffnung, die sich trapezförmig nach vorn in Richtung der Längsachse verjüngende Seitenflächen aufweist.

Das Schwenkelement ermöglicht somit mittels zweier bolzenförmiger Verbindungselemente die Beweglichkeit des Griffhalters um die Längs- und die Hochachse. Die nur in geringem Umfange erforderliche Beweglichkeit um die Querachse ist sichergestellt, weil der Griff im Griffhalter eine ausreichende Beweglichkeit aufweist.

In einer weiteren Ausführungsform kann das Schwenkelement als gummielastisches Element ausgebildet sein. Die gummielastische Lagerung hat den Vorteil, dass eine Relativbewegung des Griffhalters bezüglich des Aufnahmeblocks in alle Raumrichtungen möglich ist und zusätzlich eine Momentbeanspruchung des rollbaren Transportgutes auf das Zweirad beim Anfahren oder Abbremsen verringert werden kann. Ein gummielastisches Element kann zudem bei einem drehbar gelagerten Schwenkelement als Dämpfungselement vorgesehen sein.
In einer weiteren Ausführungsform kann das Schwenkelement einen Kugelkopf und der Aufnahmeblock eine Aufnahme für einen Kugelkopf aufweisen. Auch bei dieser Ausführungsform kann ein gummielastisches Element als Dämpfungselement vorgesehen sein.

Der Aufnahmeblock ist an einem Befestigungselement angeordnet, welches für die Befestigung der gesamten Vorrichtung am Zweirad vorgesehen ist. Besonders bevorzugt ist eine Ausführungsform mit einer offenen Klammer, die unter handelsübliche Fahrradgepäckträger eingeschoben und daran mittels Bandagen (zum Beispiel Kabelbindern oder schraubbaren Rohrschellen) fixiert werden kann. Die Klammer lässt sich kostengünstig fertigen und universell einsetzen. Die größte Breite des als Klammer ausgebildeten Befestigungselementes entspricht der größten zu erwartenden Breite handelsüblicher Gepäckträger, die Breite an der Öffnung der Klammer der kleinsten zu erwartenden Breite. Somit ist ein Einsatz an einer Vielzahl handelsüblicher Fahrradgepäckträger möglich.
In einer weiteren Ausführungsform sind ein oder zwei Befestigungselemente stabförmig und gewinkelt ausgebildet. Der Aufnahmeblock ist hierbei aus zwei Halbschalen verschraubt, die Nuten zur Aufnahme der Befestigungselemente aufweisen. Die Befestigungselementen können durch ein Gelenk schwenkbar in dem Aufnahmeblock angeordnet sein, oder ein V-förmig und gewinkeltes Befestigungselement wird durch einmaliges Zurechtbiegen an die Breite unterschiedlicher Gepäckträger angepasst.
In dieser Ausführungsform werden die Befestigungselemente mittels Halteklammern am Fahrradgepäckträger angebracht. Zwischenlagen aus geschlitztem Kunststoffschlauch mit unterschiedlichen Innendurchmessern und Wandstärken gleichen die unterschiedlichen vorkommenden Durchmesser bei den Gepäckträgerlängsstreben aus.

In einer weiteren Ausführungsform der Vorrichtung umfasst der Griffhalter ein Griffzangenpaar. Bevorzugt wird das Griffzangenpaar des Griffhalters hierbei federbelastet ausgebildet. Die Federwirkung kann durch Schraubenfedern oder gummielastisches Material erzeugt werden. Hierfür können an der Griffzangen entsprechende Aufnahmen vorgesehen sein. Außerdem können die Griffzangen aus gummielastischem Material ausgebildet sein, wobei das gummielastische Material beim Öffnen der Zangen gedehnt wird und beim Schließen der Zangen diese mittels materialinhärenter Rückstellkraft des gummielastischen Materials wieder in die geschlossenen Position gebracht werden. Am Griffhalter dieser Ausführungsform mit Griffzangen ist bevorzugt ein Schwenkelement aus gummielastischem Material angeordnet.

In einer weiteren Ausführungsform umfasst der Griffhalter eine vertikal, quer zur Fahrtrichtung angeordnete Halteplatte, die wie vorstehend beschrieben mit Schwenkelement, Aufnahmeblock und Verbindungselement schwenkbar am Zweirad angebracht ist. In dieser Ausführungsform wird der Handgriff des Transportgutes durch mindestens ein Spannelement an der Halteplatte befestigt. Die als Griffhalter ausgebildete Halteplatte weist hierbei Aufnahmen für die Aufnahme des Spannelements auf. Darüber hinaus können Haken oder Ausnehmungen in der Halteplatte vorgesehen sein, in welche das Spannelement eingehängt werden, um bei der Sicherung des Handgriffs des Transportgutes an der Halteplatte den Handgriff des Transportgutes zu umschlingen oder zu umschließen.
Die verschiedenen Ausführungsformen des Griffhalters können austauschbar vorgesehen sein, beispielsweise mit einer Aufnahmevorrichtung, die als Schraub-, Steck-, Schnapp- oder Bajonettverschluß ausgeführt ist.

In einer weiteren Ausführungsform ist das Sicherungselement als Spannelement ausgebildet und für dieses ein Halter auf dem Schwenkelement angeordnet. Sofern der Griffhalter durch Umkippen des Transportgutes einen definierten Drehwinkel um die Längsachse überschreitet, löst dieser selbsttätig die Verbindung und vermeidet dadurch Beschädigungen an der Vorrichtung und am Transportgut. Der Griffhalter verdreht sich im Normalbetrieb gegen das Schwenkelement um maximal 40° um die Längsachse, da die theoretische Obergrenze der maximalen Querneigung eines Zweirades bei ca. 45° liegt. Bis zu einem Winkel von unterhalb 90° wird das Spannseil von den Haltenoppen in seiner Position gehalten, erst bei einem noch größerem Winkel (Umkippen des Transportguts) kann das Spannelement über das Halteelement gleiten, das Transportgut freigeben, so werden Beschädigungen an der Vorrichtung vermieden und am Transportgut gering gehalten.
In einer weiteren Ausführungsform ist das Sicherungselement als um die Hochachse schwenkbarer Riegel ausgebildet und ebenfalls auf dem Schwenkelement angeordnet. Zur Fixierung des Griffs wird er über den Griff geschwenkt; beim Umkippen des Transportgutes wird der Riegel durch den sich mehr als 90° verdrehenden Griffhalter quer zur Fahrtrichtung verschwenkt und löst dadurch ebenfalls die Verbindung zum Transportgut.

Weitere Ausführungsbeispiele werden bezugnehmend auf die beiliegenden Zeichnungen näher erläutert. Hierbei zeigen:
- Fig. 1: eine schematische Darstellung der Vorrichtung als Explosionszeichnung
- Fig. 1a: ein Detail der Fig. 1- Griffhalter mit eingelegtem und gesichertem Griff des Transportgutes
- Fig. 2: eine Übersichtsdarstellung der Vorrichtung an einem Zweiradgepäckträger mit Bügelgriff des rollbaren Transportgutes
- Fig. 3: die Vorrichtung und einen darin angeordneten Handgriff, der T-förmig ausgebildet ist
- Fig. 4: die Vorrichtung mit einem als Kugelkopf ausgebildeten Schwenkelement
- Fig. 5: die Vorrichtung mit einem als Elastomerblock ausgebildeten Schwenkelement
- Fig. 6: die Vorrichtung mit einem Befestigungselement, das als separate Streben zum Zweiradhinterbau ausgebildet ist
- Fig. 7a+b: die Vorrichtung mit in der Breite verstellbarem Befestigungselement
- Fig. 8: die Vorrichtung mit Fahrradgepäckträger, in den das Befestigungselement konstruktiv integriert ist
- Fig. 9: die Vorrichtung mit Griffzange als Griffhalter
- Fig. 10: die Vorrichtung mit dem Griffhalter als vertikale Halteplatte mit Spannelement
- Fig. 11: eine Übersichtsdarstellung des Zweirads mit daran angeordneter Vorrichtung, an der ein rollbares Transportgut angeordnet ist
- Fig. 12: eine Ausführungsform mit am Schwenkelement angeordneter Haltevorrichtung und schraubbaren Halteklammern zur Befestigung am Gepäckträger
- Fig. 13: eine Explosionsdarstellung der Ausführungsform aus Fig. 12
- Fig. 14: eine Ausführungsform mit am Schwenkelement angeordneten Schwenkriegel
- Fig. 15: Ausführungsformen des aus zwei Halbschalen verschraubten Aufnahmeblocks, Fig. 15a eine Lösung mit Nut für einen U-förmigen Bügel, Fig. 15b die Lösung mit Hohlraum zur Aufnahme einer Verdickung an stabförmig ausgeführten Befestigungselementen
- Fig. 16a: eine Ausführungsform mit als am Griffhalter angeordneten elastischen Klemmelementen als Sicherungselement
- Fig. 16b: eine Ausführungsform mit einem elastisch ausgeführten Griffhalter, dessen eigene Elastizität die Sicherung des Griffs übernimmt

Fig. 1 zeigt eine bevorzugte Ausführungsform in einer Explosionsdarstellung. Der Griffhälter (10) weist eine Ausnehmung (11) in in Richtung der Querachse auf. In die Ausnehmung kann der Handgriff des Transportgutes eingelegt werden. Eine weitere Ausnehmung (13) an Hinterkante und Boden des Griffhalters (10) erlaubt die Verwendung von T-förmigen Handgriffen, die von "Trolley" genannten Reisekoffern bekannt sind. Die Sicherung des Griffs in der Ausnehmung (11) und somit im Griffhalter (10) kann durch einen Schwenk- oder Schieberiegel (12), vorzugsweise in elastischer Ausführung, erfolgen. Besonders vorteilhaft ist die Verwendung eines Gummiseils (14) als Sicherungselement (s. Fig. 1a), welches an den Seilhaltern und Spannhaken (15) angeordnet sein kann. In die Aussparungen (16) können elastische Elemente angeordnet werden (beispielsweise durch Einkleben), die die verschiedenen handelsüblichen Griffdurchmesser ausgleichen und eine spielarme Lagerung des Handgriffs im Griffhalter gewährleisten können.

Fig. 1a zeigt den Griffhalter mit eingelegtem und durch Sicherungselement (14) gesicherten Handgriff des rollbaren Transportgutes.
Der Griffhalter (10) verjüngt sich in der gezeigten Ausführungsform in Richtung Längsachse nach vorn. An seiner Vorderseite liegt er am Schwenkelement (20) an. Im Schwenkelement nehmen je eine Bohrung parallel zur Hoch- und zur Längsachse je ein bolzenförmiges Verbindungselement (21, 22) auf. Diese Verbindungselemente können als Bolzen, Schrauben mit Muttern, Nieten etc. ausgeführt sein, stellen die Beweglichkeit entlang der Hoch- und Längsachse sicher und nehmen Zug- und Bremskräfte auf. An seiner Vorderseite kann das Schwenkelement halbkreisförmig abgerundet sein.
Das Schwenkelement (20) ist bevorzugt in die Öffnung des Aufnahmeblocks (30) in vertikaler Richtung spielarm eingepasst und mittels Bolzenelements (22) gesichert. Der Drehwinkel kann durch trapezförmige, sich nach hinten verbreiternde Ausgestaltung des Aufnahmeblocks vergrößert werden und kann ca. 90° betragen.
Der Aufnahmeblock (30) ist starr verbunden mit einem Befestigungselement (40). Besonders vorteilhaft, weil kostengünstig zu fertigen und universell einsetzbar, wird dabei die Ausgestaltung des Befestigungselementes (40) als nach vorn öffnende Klammer angesehen.

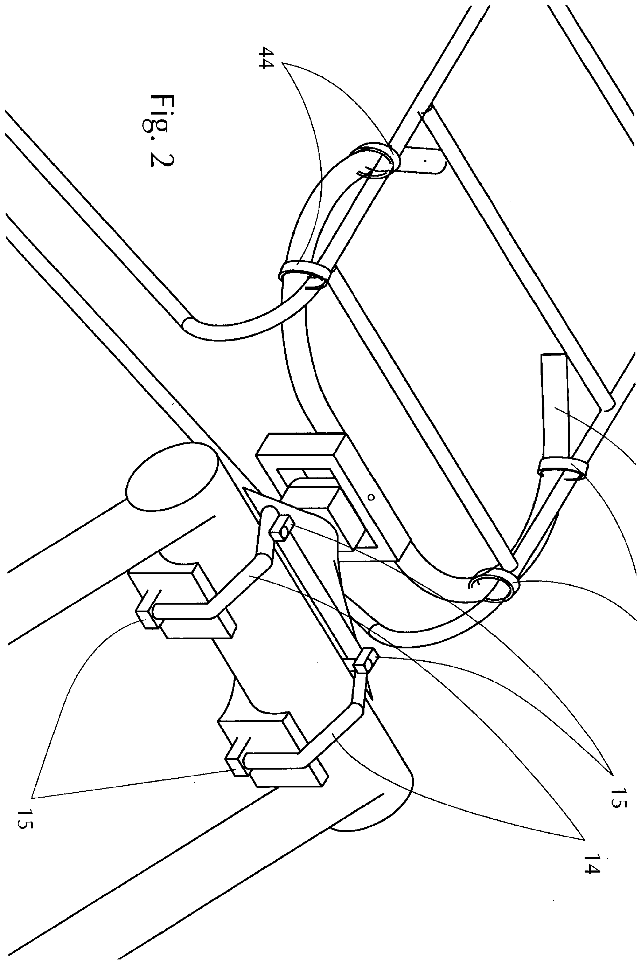

Fig. 2 ist eine Gesamtdarstellung aller relevanten Systemkomponenten - also von Fahrradgepäckträger, Vorrichtung und Handgriff des Transportguts. Fig. 2 zeigt, wie die Vorrichtung unter die Tragplattform eines handelsüblichen Gepäckträgers eingeschoben und dort mittels Haltebandagen (44) fixiert werden kann. Ersichtlich sind außerdem die Halter (15) für das Sicherungselement (14), durch das der Handgriff des rollbaren Transportgutes gesichert werden kann.

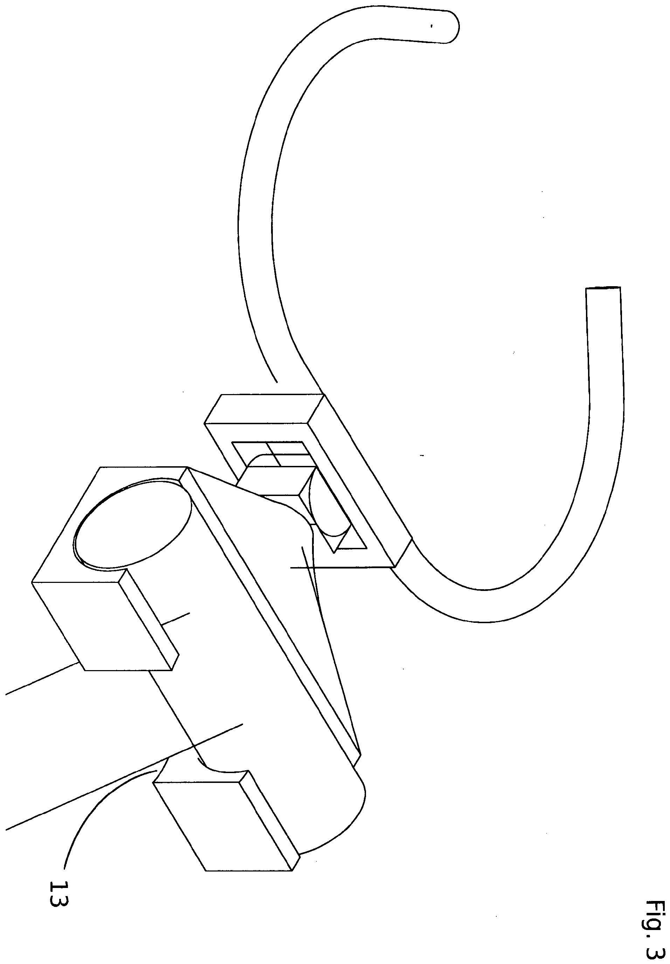

Fig. 3 zeigt die eine Weiterbildungsform der Vorrichtung, bei der eine zweite Ausnehmung (13) an der Unterseite des Griffhalters, auch die Aufnahme von T-förmigen Handgriffen ermöglicht. In einigen der folgenden Darstellungen sind aus Übersichtlichkeitsgründen die Sicherungselemente weggelassen.

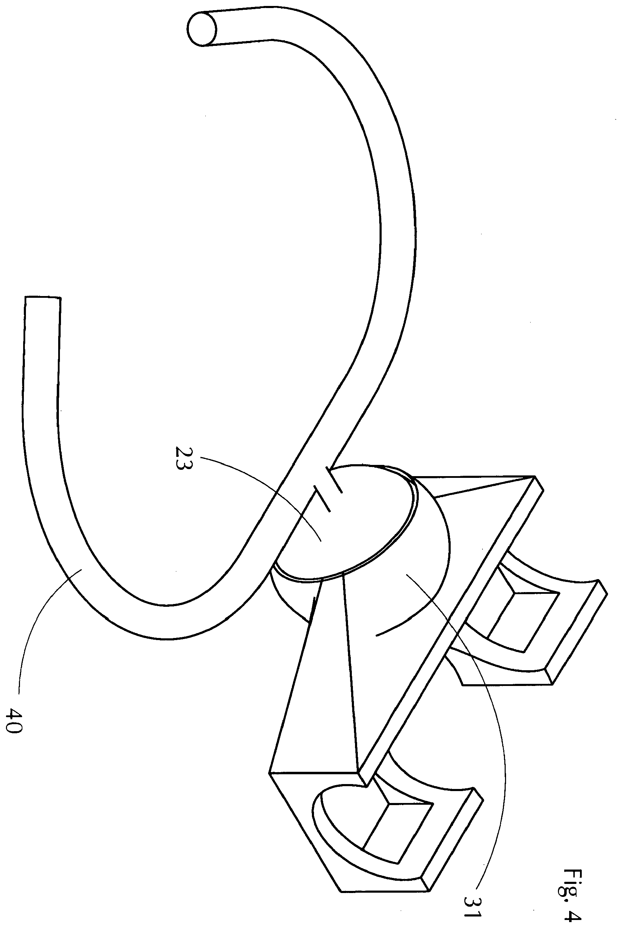

Fig. 4 zeigt die Vorrichtung mit einer Variante des Schwenkelementes. Dieses ist hierbei ausgebildet als am Befestigungselement (40) angebrachter Kugelkopf (23) mit einer - bevorzugt hohlen - Halbkugel als nicht lösbarem Gegenstück (31) zum Kugelkopf (23).

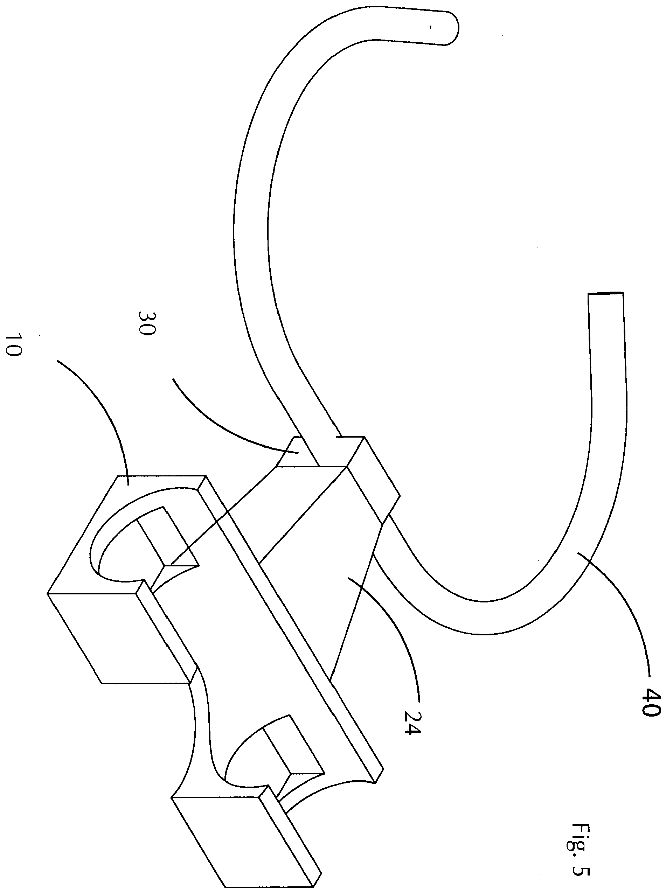

Fig. 5 zeigt die Vorrichtung mit einer Variante des Schwenkelementes, ausgeführt als Elastomer-Element (24). Durch geeignete Materialwahl beim Elastomer kann die nur in geringem Umfang erwünschte Beweglichkeit um die Querachse eingeschränkt werden.

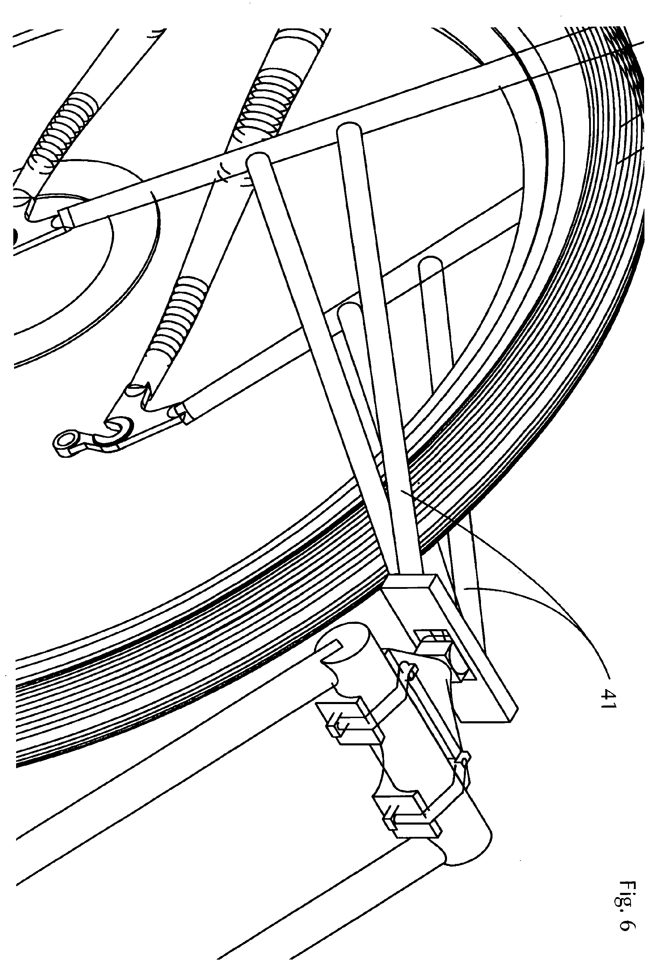

Fig. 6 stellt eine Ausführungsform für Fahrräder ohne geeigneten Gepäckträger zur Aufnahme des Befestigungselementes der Vorrichtung dar. Das Befestigungselement kann als ein oder mehrere Strebenpaare (41) ausgebildet sein, wobei die Strebenpaare starr am Aufnahmeblock angeordnet sind. Die Strebenpaare werden am Fahrradhinterbau zum Beispiel mittels Rohrschellen oder an geeigneten rahmenseitigen Anlötteilen angebracht.

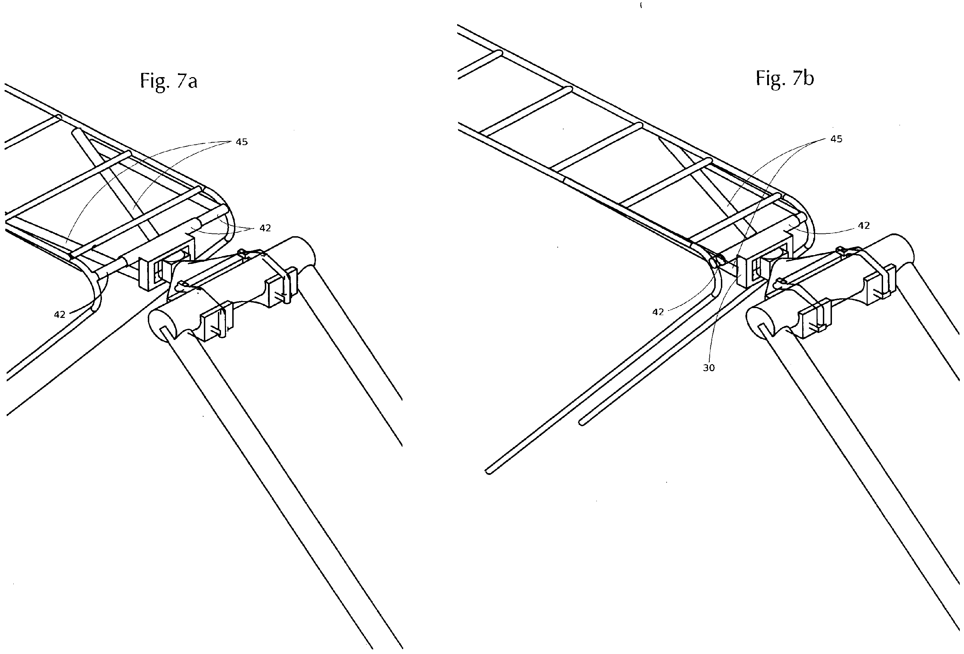

Die Fig. 7a und 7b stellen eine Ausführungsform dar, in der der Aufnahmeblock der Vorrichtung mittels breitenverstellbarer Schienen (42) an die unterschiedlichen Gepäckträgerbreiten angepasst werden kann. Dabei können die in Querrichtung verlaufenden Streben in am Aufnahmeblock (30) fixierten Hülsen mit etwas größerem Durchmesser eingeschoben werden. In Fig. 7a sind die Schienen in weiter ausgezogenem Zustand für einen breiten Gepäckträger abgebildet; in Fig. 7b an einem schmalen Gepäckträger sind sie tief in die Hülsen eingeschoben. Die Zug- und Bremskräfte könnten zum Beispiel zusätzlich mittels schräg zu den Gepäckträgerlängsstreben verlaufenden Streben (45) übertragen werden.

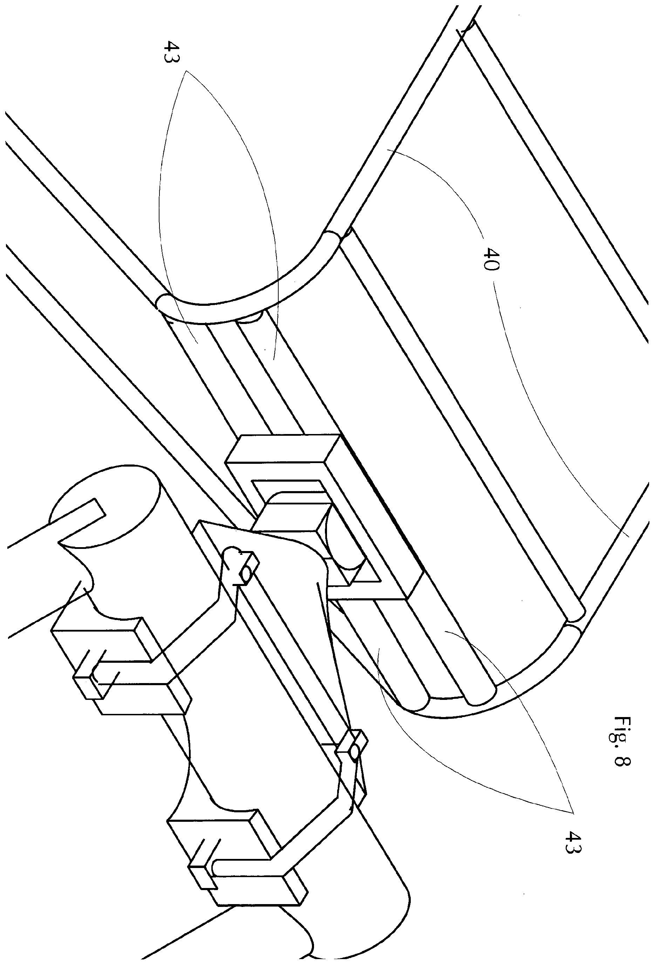

Fig. 8 stellt eine Ausführungsform dar, in der der Aufnahmeblock (30) konstruktiv mit Streben (43) in einen Fahrradgepäckträger integriert ist, welche damit zum Befestigungselement (40) werden. Eine solche Lösung ist insbesondere für die Erstausrüstung von Neubau-Fahrrädern zweckmäßig.

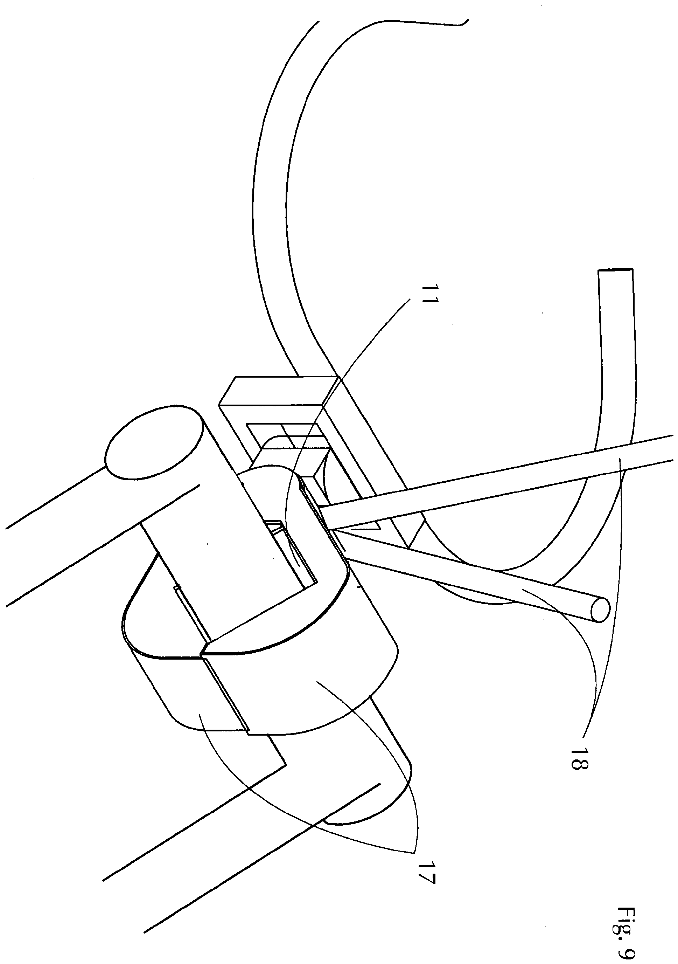

Fig. 9 stellt eine Ausführungsform dar, in der statt des Griffhalters mit Ausnehmungen (11) ein Griffzangenpaar (17) den Handgriff, ebenfalls in einer passenden Ausnehmung (11), aufnimmt. Das Griffzangenpaar wird mittels Federn und durch gummielastische Rückstellkraft in der geschlossenen Stellung gehalten und kann zum Beispiel mittels zweier Zangenöffner (18) geöffnet werden, um den Handgriff in die Ausnehmung (11) einzulegen.

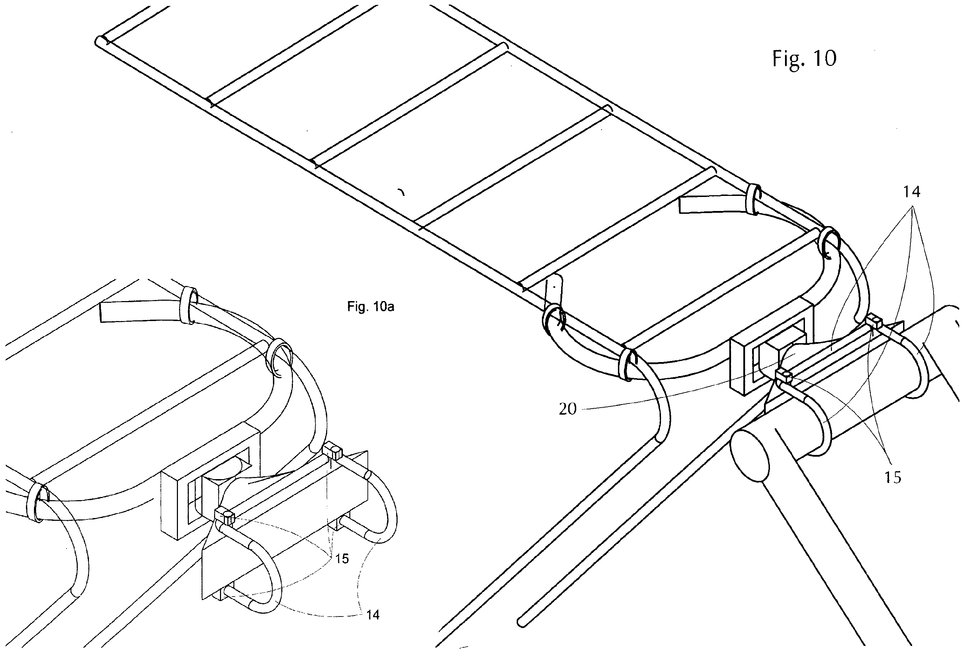

Fig. 10 stellt eine Variante der Vorrichtung dar, bei der eine vertikale, quer zur Fahrtrichtung angeordnete Halteplatte als Griffhalter fungiert. Die Befestigung des Griffs und die Aufnahme aller Zug-, Schub- und Scherkräfte obliegt hier einem Sicherungselement (14), ausgeführt als Spannelement. Dabei kann zum Beispiel ein gummielastisches Spannseil an der Unterkante der Halteplatte in zwei Bohrungen, Haken oder Ösen so befestigt sein, dass sich eine Schlaufe ergibt. (vgl. Fig. 10a). Diese Schlaufe umschlingt den Griff an dessen Hinterseite und wird an einem oder mehreren Haken an der Oberkante der Halteplatte eingehängt. Die Länge des Spannseils wird so bemessen, dass sich durch die Materialelastizität eine formschlüssige Verbindung zur Halteplatte ergibt.

Fig. 11 schließlich stellt das Gesamtgespann aus Zweirad, Vorrichtung und angehängtem rollbaren Transportgut (hier Rollenkoffer/Trolley) dar.

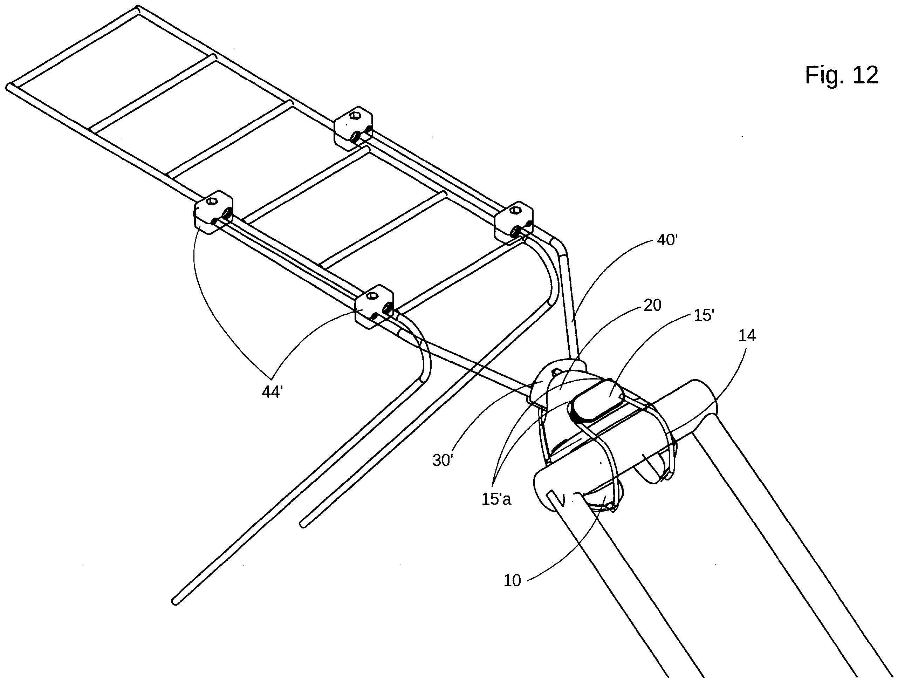

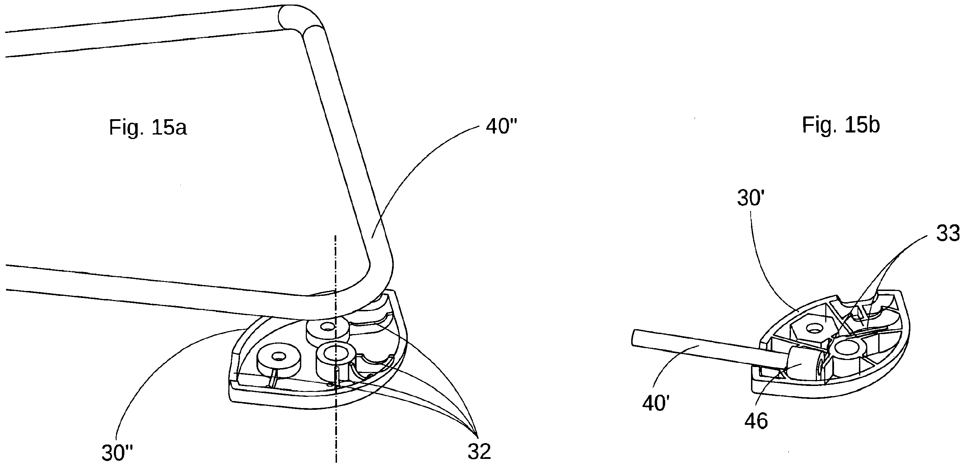

Fig. 12 ist eine Ausführungsform mit am Schwenkelement angeordneter Haltevorrichtung (15') und schraubbaren Halteklammern (44') zur Befestigung am Gepäckträger. Griffhalter, Schwenkelement und Aufnahmeblock sind hier jeweils aus einer oberen und einer unteren Halbschale zusammengeschraubt.
Der Griffhalter (10) verdreht sich im Normalbetrieb gegen das Schwenkelement um maximal 40° um die Längsachse, da die theoretische Obergrenze der maximalen Querneigung eines Zweirades bei ca. 45° liegt. Bis zu einem Winkel von unterhalb 90° wird das Spannseil (14) von den Haltenoppen (15'a) in seiner Position gehalten, erst bei einem noch größerem Winkel (Umkippen des Transportguts) kann das Spannseil (14) über die Vorderkante des Halteelements (15') gleiten, das Transportgut freigeben und so Beschädigungen an der Vorrichtung vermeiden und solche am Transportgut gering halten.
Die Befestigungselemente (40') sind als gewinkelte Stabelemente (zum Beispiel aus Stahldraht oder -rohr) ausgebildet. Im Aufnahmeblock (30') sind sie mittels Verdickungen auf ihren Enden - ausgestaltet als aufgeschweißte oder -gepresste Kugeln oder aufgeschraubte Muttern - und dazu passenden Ausnehmungen im Aufnahmeblock um die Hochachse schwenkbar, so kann der horizontale Abstand beider Befestigungselemente an unterschiedliche Gepäckträgerbreiten angepasst werden. Details dazu zeigt Fig. 15b.
Die Halteklammern (44') sind ebenfalls aus zwei Halbschalen verschraubt. Sie weisen je eine zum Durchmesser des Befestigungselements (40), und eine zum größten Durchmesser handelsüblicher Gepäckträgerstreben passenden Nut auf. Wenn Gepäckträger mit geringerem Strebendurchmesser verwendet werden sollen, sorgen Zwischenlagen aus geschlitztem Kunststoffschlauch passender Durchmesser und Wandstärken für den Ausgleich der Durchmesserdifferenzen.

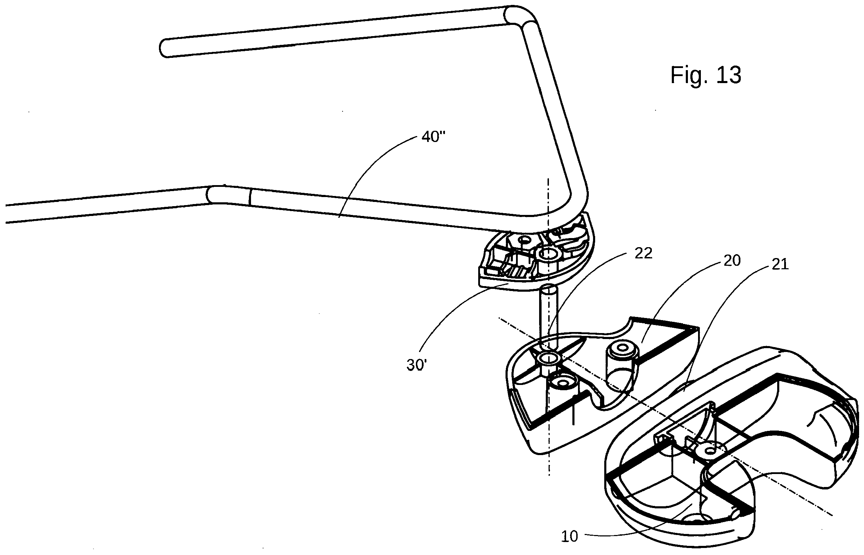

Fig. 13 ist eine Explosionsdarstellung der im vorstehenden Absatz beschriebenen Ausführungsform. Aus Übersichtlichkeitsgründen sind die oberen Halbschalen, das Sicherungselement und die Halter dafür weggelassen.

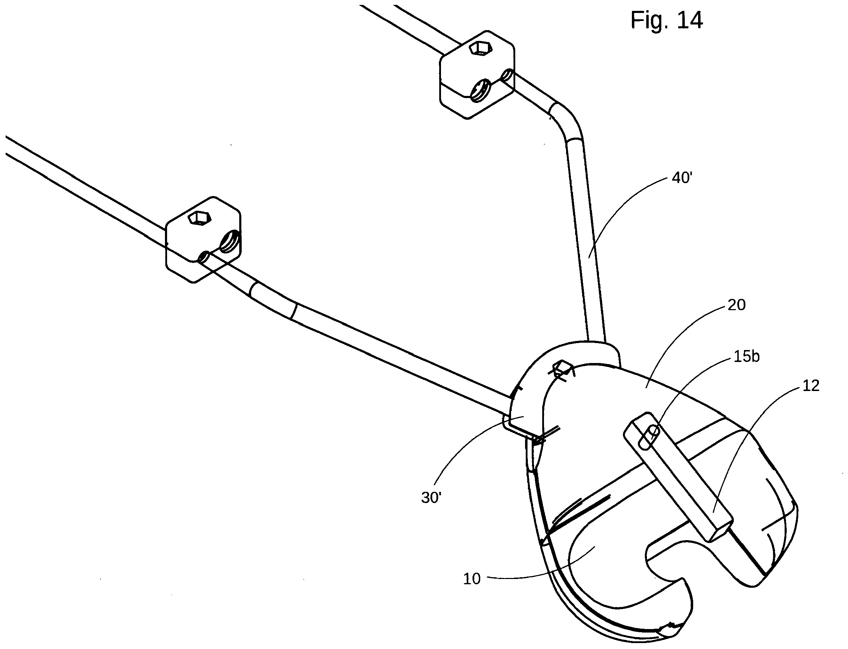

Fig. 14 stellt die Ausführung mit elastischem Schwenkriegel (12) als Sicherungselement dar. Der Schwenkriegel wird um die Drehachse 15b über den Griff geschwenkt; beim Umkippen des Transportguts wird der Riegel durch den sich mehr als 90° verdrehenden Griffhalter quer zur Fahrtrichtung verschwenkt und löst dadurch ebenfalls die Verbindung zum Transportgut.

Fig. 15a/b zeigt Ausführungsformen des aus zwei Halbschalen verschraubten Aufnahmeblocks (30') und (30"), Fig. 15a ist eine Lösung mit Nut (32) für einen U-förmigen Bügel (40"), Fig. 15b eine Lösung mit Hohlraum (33) zur Aufnahme einer Verdickung (46) an stabförmig ausgeführten Befestigungselementen (40'); dargestellt ist immer die untere Halbschale. In beiden Varianten ist die Ausnehmung im Aufnahmeblock (30') und (30") nach hinten V-förmig aufgeweitet, so dass bei der Montage die Befestigungselemente um die Hochachse bewegt werden können und

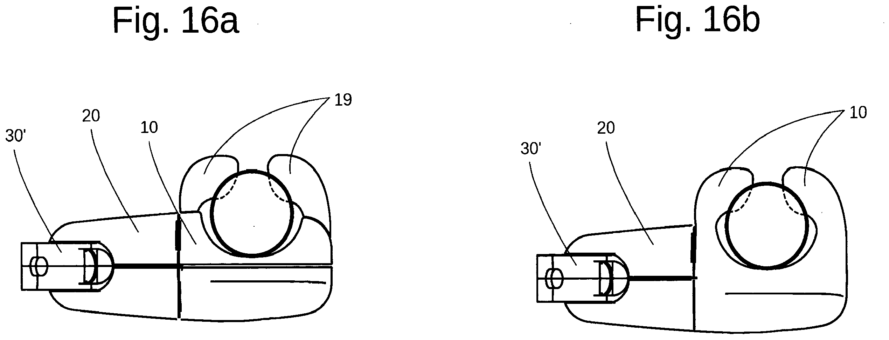

Fig. 16a stellt eine Ausführungsform dar, bei der am Griffhalter angeordnete, elastischen Klemmelemente (19) als Sicherungselement fungieren. Gestrichelt gezeichnet ist die Ruheposition der Klemmelemente ohne eingelegten Griff. Durch das Einlegen des Griffs werden die Klemmelemente verformt und halten durch ihre Rückstellkraft den Griff in Position.
Fig. 16b ist eine eine Ausführungsform, bei der der Griffhalter insgesamt aus elastischem Material gefertigt ist, gestrichelt gezeichnet ist wiederum die Ruheposition ohne eingelegten Griff.
Durch das Einlegen des Griffs der gesamte Griffhalter verformt und hält durch die Rückstellkraft des Materials den Griff in Position.

### Bezugszeichenliste

- 10: Griffhalter

- 11: Ausnehmung
- 12: Sicherungselement als Riegelelement
- 12a: Schwenkachse des Schwenkriegels
- 13: zweite Ausnehmung
- 14: Sicherungselement als Spannelement
- 15, 15': Halter für Sicherungselement
- 15'a: Haltenoppen
- 15b: Schwenkachse für Schwenkriegel
- 16: Aussparung für optionales Lagerungselastomer
- 17: Griffzangen
- 18: Griffzangenöffner
- 19: elastisches Klemmelement20 Schwenkelement
- 21: horizontaler Verbindungsbolzen
- 22: vertikaler Verbindungsbolzen
- 23: Kugelkopf
- 24: elastisches Schwenkelement

- 30: Aufnahmeblock
- 30': Aufnahmeblock, aus Halbschalen verschraubt

- 31: Kugelkopf-Gegenstück
- 32: Nut im Aufnahmeblock
- 33: Hohlraum im Aufnahmeblock

- 40: Befestigungselement
- 40': Befestigungselement, als gewinkeltes Stabelement ausgebildet
- 40": Befestigungselement, als V-förmiger und gewinkelter Bügel ausgebildet

- 41: Befestigungselement als zusätzliche Strebe zum Fahrrad-Hinterbau
- 42: Befestigungselement, breitenverstellbar
- 43: Befestigungselement, in Gepäckträger integriert
- 44: Haltebandagen
- 44': Halteklammern
- 45: Zugstreben
- 46: Verdickung am Befestigungselement

## Patentansprüche

1. Vorrichtung zur lösbaren Befestigung eines rollbaren Transportguts an einem Zweirad, wobei die Vorrichtung umfasst
- einen Griffhalter (10), wobei der Griffhalter (10) zur Aufnahme eines an dem Transportgut angeordneten Griffs ausgebildet ist,
- ein an dem Griffhalter (10) angeordnetes Schwenkelement (20),
- einen Aufnahmeblock (30), welcher das an dem Griffhalter (10) angeordnete Schwenkelement (20) aufnimmt und
- ein an dem Aufnahmeblock (30) angeordnetes Befestigungselement (40) zur Befestigung des Aufnahmeblocks (30) an dem Zweirad.

2. Vorrichtung nach Anspruch 1, **dadurch gekennzeichnet, dass** der Griffhalter (10) als Halteplatte ausgebildet ist, wobei die Halteplatte mindestens ein Sicherungselement (14) zur Befestigung des Griffs des Transportgutes am Griffhalter (10) aufweist.

3. Vorrichtung nach Anspruch 1, **dadurch gekennzeichnet, dass** der Griffhalter (10) mindestens eine Ausnehmung (11) aufweist, die zur Aufnahme eines an dem Transportgut angeordneten Griffs ausgebildet ist.

4. Vorrichtung nach Anspruch 3, **dadurch gekennzeichnet, dass** der Griffhalter (10) aus elastischem Material gefertigt ist und eine Ausnehmung (11) mit einem etwas kleineren Durchmesser als der kleinste handelsübliche Durchmesser der Griffe möglicher Transportgüter aufweist, wobei der Griff des Transportgutes beim Einlegen des Griffs in die Ausnehmung (11) des Griffhalters (10) durch die Materialelastizität formschlüssig im Griffhalter (10) fixiert wird.

5. Vorrichtung nach Anspruch 3, **dadurch gekennzeichnet, dass** die Ausnehmung des Griffhalters einen etwas größeren Durchmesser aufweist als der größte handelsübliche Durchmesser der Griffe möglicher Transportgüter.

6. Vorrichtung nach einem der Ansprüche 3 bis 5, **dadurch gekennzeichnet, dass** der Griffhalter (10) eine weitere Ausnehmung (13) rechtwinklig zur ersten Ausnehmung (11) aufweist, die ausgebildet ist, die Befestigungsstange eines T-förmigen Griffs eines rollbaren Transportgutes aufzunehmen.

7. Vorrichtung nach einem oder mehreren der vorhergehenden Ansprüche, **dadurch gekennzeichnet, dass** der Griffhalter (10) mindestens ein Sicherungselement (12) aufweist, das den Griff des rollbaren Transportguts am oder im Griffhalter (10) fixiert.

8. Vorrichtung nach Anspruch 7, **dadurch gekennzeichnet, dass** das Sicherungselement
- als schwenk- oder schiebbares Riegelelement (12), und/oder
- als Spannelement (14), und/oder
- als elastisches Klemmelement (19) ausgebildet ist, wobei das Klemmelement parallel zur Orientierung des Griffs an der Oberkante in der Ausnehmung des Griffhalters angeordnet ist.

9. Vorrichtung nach einem oder mehrerer der vorhergehenden Ansprüche, **dadurch gekennzeichnet, dass** das Schwenkelement (20) im Aufnahmeblock (30) schwenkbar gelagert ist, wobei ein bolzenförmig ausgebildetes Element (21) am Schwenkelement (20) derart angeordnet ist, dass der Griffhalter (10) mit dem Schwenkelement (20) verbunden ist und der Griffhalter (10) um die Längsachse drehbar gelagert ist und wobei ein weiteres bolzenförmig ausgebildetes Element (22) zwischen Schwenkelement (20) und Aufnahmeblock (30) parallel zur Hochachse angeordnet ist, um ein Schwenken/Rotieren des Schwenkelements (20) im Aufnahmeblock (30) um die Mittelachse des weiteren bolzenförmigen Elements (22) zu erlauben.

10. Vorrichtung nach einem oder mehrerer der vorhergehenden Ansprüche, **dadurch gekennzeichnet, dass** der Aufnahmeblock (30) eine Öffnung umfasst, wobei die Öffnung trapezförmig sich parallel zur Hochachse verjüngende Seitenflächen aufweist.

11. Vorrichtung nach einem oder mehrerer der vorhergehenden Ansprüche, **dadurch gekennzeichnet, dass** das Schwenkelement (20) als gummielastisches Element ausgebildet ist.

12. Vorrichtung nach einem oder mehreren der vorhergehenden Ansprüche, **dadurch gekennzeichnet, dass** das Schwenkelement (20) einen Kugelkopf und der Aufnahmeblock (30) eine Aufnahme für einen Kugelkopf aufweist.

13. Vorrichtung nach einem oder mehreren der vorhergehenden Ansprüche, **dadurch gekennzeichnet, dass** der Griffhalter (10) als elastische oder federbelastete Griffzangen (17) ausgebildet ist.

14. Vorrichtung nach einem der vorhergehenden Ansprüche, **gekennzeichnet durch** mindestens eines der folgenden Merkmale:
- das Befestigungselement (40) ist halbkreisförmig ausgebildet;
- die stabförmigen gewinkelten Befestigungselemente (40') im Aufnahmeblock (30') sind durch ein Gelenk schwenkbar gelagert;
- der Aufnahmeblock (30") weist eine nach vorn V-förmig aufgeweitete Nut auf, die V-förmig ausgebildete Befestigungselemente (40") mit unterschiedlichen Öffnungswinkeln aufnehmen kann;
- die stabförmigen gewinkelten Befestigungselemente (40') sind mit schraubbaren Klemmen (44') versehen , die in Längsrichtung eine Ausnehmung mit dem größten handelsüblichen Durchmesser der Gepäckträgerstreben aufweisen, in die Zwischenlagen aus geschlitztem Kunststoffschlauch mit unterschiedlichen Innendurchmessern und Wandstärken eingelegt werden können, um die Differenz zwischen dem Klemmeninnendurchmesser und dem Gepäckträgerstrebendurchmesser auszugleichen.

15. Vorrichtung nach einem der Ansprüche 7 und 8, **dadurch gekennzeichnet, dass** das selbsttätige Lösen der Sicherungselemente beim Umkippen des Transportgutes erfolgt; wobei das selbsttätige Lösen des Spannelements (14) durch das Verdrehen des Griffhalters (10) um die Längsachse gegen das Schwenkelement erfolgt und die Haltenoppen (15'a) sicherstellen, dass ein Abgleiten des Spannelements (14) erst beim Überschreiten eines definierten Neigungswinkels um die Längsachse freigegeben wird.
